# EUROPEAN PATENT APPLICATION

(11) **EP 4 696 154 A2**
(43) Date of publication of application: **18.02.2026**
(21) Application number: 25217215.0
(22) Date of filing: 17.12.2019
(51) Int. Cl.: A24B 15/18

(54) **METHOD OF FORMING A SHAPED FOAM CONTAINING A TOBACCO INGREDIENT CONTAINING AGENT**

(30) Priority: 21.12.2018 EP 18215438
(62) Divisional of application: 19829096.7
(71) Applicant: JT International S.A., 1202 Genève (CH)
(72) Inventor: PLATTNER, Michael, 54290 Trier (DE); ORTH, Michael, 54295 Trier (DE); MASTALERZ, Remigius, 54329 Konz (DE)
(74) Representative: Hoffmann Eitle

(57) **Abstract**

The present invention relates to an extruded shaped foam comprising: a tobacco ingredient containing agent, an aerosol forming agent, a foam stabilizing agent, and a foam forming agent.

## Description

### Summary

The present invention relates to an extruded shaped foam comprising a tobacco ingredient containing agent, an aerosol forming agent, a foam stabilizing agent, and a foam forming agent. The present invention further relates a stick comprising the extruded shaped foam and an electronic smoking device comprising the extruded shaped foam. Moreover, the present invention relates an use of an extruded shaped foam.

### Background Art

Foamed tobacco products have been known in the prior art mainly in the field of reconstituted tobacco products. Manufacturing processes usually involve forming reconstituted tobacco sheets out of finely ground tobacco particles with a foam forming and a foam stabilizing agent, followed by shredding the reconstituted sheets, and blending with natural tobacco shreds. The reconstituted tobacco products are usually used for the manufacture of cigarettes. However, these foams are intended for use by combustion as a replacement for tobacco using reconstituted tobacco.

For example, US 7500485 B1 relates to a foamed tobacco composition which includes tobacco particles, water and a foam stabilizer which is a hydrophobically modified hydroxyalkylated carbohydrate, as well as the use thereof in a low density tobacco sheet material, which then can be used to produce filler material in cigars, cigarettes or pipes. In US 2016/286851 A1 a smoking composition comprising an aerosol-forming substrate and a flavor precursor compound is disclosed.

US 2011/088708 A1 describes smokable filler materials and a process for making same, wherein the smokable filler material comprises a foaming agent, an agent capable of forming chemical cross-linkages, and a cross-linking agent.

EP 1 294 242 B1 discloses a smokable filler material comprising a fruit material and a smoking article with the smokable filler material.

Further, EP 2 934 197 A1 discloses a smokeless oral tobacco product and a method of producing a smokeless oral tobacco product comprising tobacco and an insoluble foamed material.

The spread and popularity of electronic cigarettes (e-cigarettes) came with the need and possibility for novel tobacco products to be vaporized and inhaled by smokers. E-cigarettes or similar devices like electronic pipes usually generate an aerosol by heating a liquid comprising an aerosol forming agent, water, and optionally additional flavoring and nicotine. Overall, this can lead to an uneven smoking profile, wherein the experienced flavor of puffs can differ significantly, e.g. by an inefficient extraction of key compounds in the liquid. For this purpose, foams, respectively mousses, can be used. The preparation thereof from e.g. mixing using aeration has been known e.g. in the field of food technology. However, for scale-up and stable preparation there is still room for improvement.

The problem of the present invention is thus to provide an improved shaped foam.

### Brief description of the invention

To solve the above-mentioned problem, independent claims 1 and 15 of the present invention refer to an extruded shaped foam. Independent claim 14 relates to an use of an extruded shaped foam. Further embodiments are described in the dependent claims.

For scale-up the inventors have considered extrusion as a means for stable formation of shaped foam. The inventors surprisingly found that a mousse-like tobacco foam can be produced with an extruder, as it was assumed that the structure will be too dense due to compaction in the extruder. The inventors have further found that extrusion can avoid the curing step usually required in molding applications for foam production. The inventors further found that a specific sequence of addition of the ingredients will lead to a stable formation of foam with good consistency without lump formation. Particularly the inventors found that the addition of the tobacco ingredient containing agent to a foam forming agent helps avoiding lump formation in the extrusion process, whereas the addition of a foam stabilizing agent in a step thereafter in an extrusion device allows stable production of foam with a desired shape. Further, a stable and continuous dosing is possible using extrusion, enabling production of an essentially homogeneous stable product.

A first aspect of the present invention relates to a method of forming a shaped foam containing a tobacco ingredient containing agent, comprising:
a first step of combining and mixing the tobacco ingredient containing agent and a foam forming agent to obtain a first mixture;
a second step of adding an aerosol forming agent and optionally a solvent and/or at least one non-tobacco flavoring agent to the first mixture to obtain a second mixture;
a third step of adding a foam stabilizing agent to the second mixture to obtain a third mixture; and
extruding the third mixture to produce a shaped foam,
wherein at least the second and the third step are carried out inside an extruder.

A second aspect of the present invention is directed to a shaped foam containing a tobacco ingredient containing agent, produced by the method of the present invention.

Furthermore disclosed in a third aspect is a device for producing shaped foam containing a tobacco ingredient containing agent, comprising
an extruder comprising:
at least three barrels, comprising
a first barrel that is configured to mix the tobacco ingredient containing agent and a foam forming agent to obtain a first mixture, and which comprises at least one opening that is configured to introduce a mixture containing the tobacco ingredient containing agent and the foam forming agent, or which comprises at least two openings that are configured to introduce the tobacco ingredient containing agent and a foam forming agent separately;
a second barrel that is configured to mix the first mixture with an aerosol forming agent and optionally a solvent and/or at least one non-tobacco flavoring agent to obtain a second mixture, and which comprises at least one opening that is configured to introduce the aerosol forming agent and optionally the solvent and/or the at least one non-tobacco flavoring agent; and
a third barrel that is configured to mix the second mixture with a foam stabilizing agent to obtain a third mixture, and which comprises at least one opening that is configured to introduce the foam stabilizing agent;
wherein the second barrel is located downstream of the first barrel and the third barrel is located downstream of the second barrel in the direction in which a mixture is transported inside the extruder;
wherein the extruder further comprises a die plate that is configured to shape the third mixture into the shaped foam containing a tobacco ingredient containing agent.

### Figures

The enclosed drawings should illustrate embodiments of the present invention and convey a further understanding thereof. In connection with the description it serves as explanation of concepts and principles of the invention. Other embodiments and many of the stated advantages can be derived in relation to the drawings.
FIG. 1 shows schematically an exemplary step sequence in a method of the present invention.
In FIG. 2 a schematic drawing of a device according to the present invention is depicted.
FIG. 3 shows examples of shaped foam produced in the present examples.

### Detailed description of the invention

### Definitions

Unless defined otherwise, technical and scientific terms used herein have the same meaning as commonly understood by one of ordinary skill in the art to which this invention belongs.

All values given in the present disclosure are to be understood to be complemented by the word "about", unless it is clear to the contrary from the context.

With the present method particularly an open pored foam can be formed. Thus, the foam of the present invention is an open pored foam according to certain embodiments. An open pored foam as used herein is to be understood as a foam which can be considered as being formed of a plurality of interconnecting pores (formed out of a structural material derived from the foam forming agent cooperating with the interacting components such as the foam stabilizing agent, solid components such as tobacco particles and some solvent, etc.) which are able to contain fluid, in particular a mixture of humectant/liquid aerosol forming substrate and air, wherein at least a significant portion (e.g. greater than 50% by volume) of the pores in the foam are fluidly connected with each other, contrary to a closed-cell foam, wherein the majority of the pores form discrete pockets, each completely enclosed by pore-forming material so as to substantially prevent fluid from passing freely between pores. It is currently believed that the foams, particularly mousses, formed as described herein are largely open-pored foams, particularly mousses, because after heating the foam, particularly mousse, to release vapour, substantially all of the humectant appears to be released based on measuring the weight of the foam, particularly mousse, portion before and after heating, which could not be readily explained if the humectant was not able to travel through neighbouring pores to reach the surface of the foam, particularly mousse, portion. However, alternative explanations cannot be totally excluded - for example closed pores could perhaps be opened by rupturing a closed cell wall as a result of the pressure of vaporized gas, etc.

A tobacco ingredient containing agent can be any compound, mixture, particle matter, and/or solution that contains and/or carries a constituent of tobacco, either artificially included or naturally contained in tobacco, e.g. tobacco, tobacco particles, tobacco flavor and/or nicotine. In contrast, an example for an artificially added non-tobacco-specific flavor would be menthol.

An aerosol forming agent can be any compound, mixture and/or solution that is capable of forming an aerosol, e.g. when heated and/or in mixture with a tobacco ingredient containing agent. Well known examples include humectants such as glycerin and propylene glycol, other alcohols, such as ethanol, etc.

As used herein, wt.-% is to be understood as weight percent, based on the total weight of the foam, unless explicitly otherwise specified. In the present disclosure, all amounts are given in wt.-%, unless clearly stated otherwise or obvious from context. In the present disclosure, furthermore all amounts given in wt.-% in a particular foam add up to 100 wt.-%. The weight percent are thereby calculated by dividing the mass of each component by the total mass of the foam, unless indicated otherwise or clear from context.

As used herein, vol.% is to be understood as volume percent, based on the total volume of the foam, unless explicitly otherwise specified. In the present disclosure, all amounts given in vol.% in a particular foam add up to 100 vol.% The volume percent are thereby calculated by dividing the volume of each component by the total volume of the foam, unless indicated otherwise or clear from context.

Particle sizes, as disclosed in this invention, can be measured by any suitable method, e.g. sieving or laser diffraction, preferably sieving.

A first aspect of the present invention relates to a method of forming a shaped foam containing a tobacco ingredient containing agent, comprising:
a first step of combining and mixing the tobacco ingredient containing agent and a foam forming agent to obtain a first mixture;
a second step of adding an aerosol forming agent and optionally a solvent and/or at least one non-tobacco flavoring agent to the first mixture to obtain a second mixture;
a third step of adding a foam stabilizing agent to the second mixture to obtain a third mixture; and
extruding the third mixture to produce a shaped foam,
wherein at least the second and the third step are carried out inside an extruder.

According to certain embodiments, at least a solvent, particularly comprising or being water, is added in the second step. The addition of water in the extruder enables the formation of a fluffy structure, which leads to a weight reduction in the final shaped foam compared to foam produced using a mixer with aeration and subsequent curing. According to certain embodiments, the weight ratio of foam forming agent to solvent, particularly water, in the present method is in a range of 4:1 to 1:4, preferably 3:1 to 1:3, further preferably 2:1 to 1:2.5, particularly preferably 1.5:1 to 1:2.

According to certain embodiments, the foam can be aerated with a gas, e.g. in the second and/or third step and/or before and/or after the second step and/or after the third step.

In the present method, the aerosol forming agent, the form foaming agent, the foam stabilizing agent, the tobacco ingredient containing agent, the at least one non-tobacco flavoring agent, and the solvent are not particularly restricted. Also a gas used for aeration is not particularly restricted, and can be e.g. air. Also further components can be admixed. According to certain embodiments, essentially no further components or no further components are admixed, though.

According to certain embodiments, the weight of the tobacco ingredient containing agent is 0.1 - 40 wt.-%, preferably 0.1 - 33 wt.-% of the weight of the foam, and/or the weight of the aerosol forming agent is 10 - 80 wt.-%, preferably 40 - 70 wt.-%, particularly preferably 45 - 65 wt.-%, of the weight of the foam. According to certain embodiments, the weight of the tobacco ingredient containing agent is 0.1 - 40 wt.-% of the weight of the foam in the present methods, and the weight of the aerosol forming agent is 10 - 80 wt.-%, preferably 40 - 70 wt.-%, particularly preferably 45 - 65 wt.-%, of the weight of the foam.

According to certain embodiments, the weight of the foam forming agent is less than 20 wt.-% of the foam. According to certain embodiments, the foam forming agent is a non-protein containing polysaccharide and the weight of the foam forming agent is less than 20 wt.-% of the foam.

A wide range of aerosol forming agent amounts (by percentage weight) is possible, i.e. as set out above between 10-80 wt.-%. If more than 80 wt.-% are contained, foam cannot be reliably formed and the substance can remain entirely liquid. Such a point can e.g. be reached with formulations comprising between 70 to 80 wt.-%, with 80 wt.-% being achievable usually only with some difficulty. Formulations with 70 wt.-% can be reliably and stably formed with good vapour generation. On the other hand, by reducing the amount of aerosol forming agent the total amount of vapour which the mousse can generate in a smoking session is reduced. Accordingly other components can be increased in amount, though, e.g. the tobacco ingredient containing agent, leading to a different taste. If the amount of aerosol forming agent is too low, this may be detrimental to foam formation as well. At the lower end of the aerosol forming agent amount by weight, below 20 wt.-% it was difficult to form a foam - rather a dryish paste is formed instead. Moreover, below about 40 wt.-% humectant level (down to 20 wt.-%), the taste profile is weakened (as well as the total amount of vapour which can be generated from a given amount of mousse being reduced), possibly because the uptake of flavour from the tobacco or other flavour forming materials by the aerosol forming agent is reduced. Between 40 wt.-% and 70 wt.-% there is generally a trade off between the fullness of the taste (which is generally found to be optimum at around 40 wt.-% humectant levels) and the amount of vapour which can be generated from a given volume of foam, particularly mousse. For some consumers the amount of vapour which can be generated from a given amount of foam, particularly mousse, may be more important to them than the fullness of the taste (preferring say a weaker tasting foam (mousse) which nonetheless provides more puffs during a session before the foam (mousse) portion needs to be replaced).

According to certain embodiments, the balance to 100 wt.-% of the weight of the foam is essentially foam stabilizing agent and foam forming agent and optionally solvent, so that essentially only these components are added in the present methods. Small amounts of water and/or acid and/or ester, e.g. diacetin, up to 15 wt.-%, preferably up to 10 wt.-%, e.g. up to 7 wt.-%, further preferably up to 6 wt.-%, even further preferably up to 3.5 wt.-%, particularly water, can be added in the foam according to certain embodiments at a suitable time, e.g. together with the aerosol forming agent and/or the foam forming agent and/or the foam stabilizing agent and/or the tobacco ingredient containing agent, preferably together with the aerosol forming agent, but also at another time, e.g. before or after the aerosol forming agent. A solvent is preferably added with the aerosol forming agent, if it is added. According to certain embodiments, no acid and/or ester, e.g. diacetin, or at least less than 1 wt.-%, is added tin the present method. In burning applications, e.g. smoking articles, normally water is contained in higher amounts as dry smoke does not taste so good. In contrast, the present foams are particularly not combusted and the aerosol forming agent can carry aromas and/or flavors, so that the amount of water can be kept low, although some small amounts of water may help to reduce any harshness in the vapour and give rise to a milder smoking experience, as well as achieve a good foam formation in the extrusion process. Similarly, the addition of a small amount of diacetin (preferably less than 1 wt.-%) may also reduce any harshness in the produced aerosol as experienced by users.

The tobacco ingredient containing agent, e.g. tobacco, is used to provide authentic flavor, and is not particularly limited. According to certain embodiments, the tobacco ingredient containing agent of the present foam is at least one selected from the group consisting of tobacco, tobacco flavor such as various tobacco extracts, and nicotine or a derivative thereof. The tobacco, tobacco flavor and/or nicotine may be derived from any part of the tobacco plant (seed, stem, leave and so on).

The tobacco ingredient containing agent is preferably comprised in the present foams in an amount of 0.1 to 40 wt.-%, further preferably 0.1 - 33 wt.-% of the weight of the foam and can be added accordingly. If the amount of tobacco is increased above 40 wt.%, particularly above 33 wt.-% of the weight of the foam, for example at the expense of the stabilizing agent, the foam, e.g. in a mousse, may become too brittle and unstable. Also if the amount of the tobacco ingredient containing agent is increased above this amount, the amount of the aerosol forming agent may be reduced, which can cause a lower amount of aerosol TPM (total particle matter, which is the amount of aerosol matter retained in a filter per user inhale). In certain embodiments the amount of tobacco ingredient comprised in the foam is 1 - 30 wt.-% of the weight of the foam, preferably 3 - 29 wt.%, further preferably 5 - 28 wt.-%, more preferably 10 - 28 wt.%, even further preferably 11 to 27.5 wt.-%, e.g. 15 to 25 wt.-%, e.g. 11 - 23 wt.-%, e.g. between and including 17 - 21 wt.-%.

According to certain embodiments, the tobacco ingredient containing agent comprises tobacco particles having a particle size of less than 200 µm, preferably less than 150 µm, further preferably less than 100 µm, even further preferably less than 50 µm, even preferably less than 30 µm, e.g. 2 - 150 µm, e.g. 5 - 100 µm, e.g. 5 - 50 µm, e.g. 5 - 30 µm, e.g. 5 - 15 µm, e.g. 20 - 50 µm, e.g. 60-90 µm. The particle size can be measured through sieving, and the particles may be obtained through any suitable shredding and/or milling process. According to certain embodiments, the tobacco particles have essentially a uniform size, e.g. a uniform size.

However, it is also possible to add tobacco particles with different sizes in two or more fractions, e.g. a first fraction with particles having a size of less than 30 µm, e.g. less than 20 µm, and a second fraction with particles having a size of more than 30 µm, e.g. more than 50 µm, e.g. more than 100 µm, e.g. more than 200 µm. e.g. about 250 µm or more. Preferably, a, e.g. second, fraction of tobacco particles with a size of more than 30 µm is contained in a mixture of tobacco particles with different sizes in an amount of less than 90 wt.-%, preferably 80 wt.-%, or less, further preferably less than 50 wt.-%, even further preferably less than 40 wt.-%, even further preferably less than 30 wt.-%, even further preferably 20 wt.-% or less, based on the total weight of the tobacco particles. An addition of tobacco particles with a size of more than 30 µm can lead to a reduction in harshness of the aerosol liberated from the foam upon heating in the first puffs.

In the present method and foam, the foam stabilizing agent is not particularly limited as long as it can stabilize the foam to some extent after formation. According to certain embodiments, the foam stabilizing agent of the present foam is selected from the group consisting of cellulose gum, hydroxyalkylated carbohydrates, derivatives thereof, e.g. salts thereof, preferably alkali metal salts thereof, e.g. sodium and/or potassium salts thereof, and mixtures thereof. Both of the cellulose gum and the hydroxyalkylated carbohydrates are not particularly restricted. According to certain, preferred, embodiments, the foam stabilizing agent is a cellulose gum, particularly a carboxymethyl cellulose, or a derivative thereof. An exemplary, preferred, cellulose gum which may be used in the present invention is CEKOL^{®} 2000 and/or Ceroga 4550C (C.E. Roeper GmbH), a purified sodium carboxymethyl cellulose each. Another class of suitable foam stabilizing agents are hydroxyalkylated carbohydrates, and more preferably cellulose ethers and derivatives thereof. A cellulose ether or derivative thereof that can be used can have at least one substituent selected from the group consisting of methyl, ethyl, hydroxyethyl and hydroxypropyl groups. It can further be substituted with a linear or branched substituted or unsubstituted alkyl radicals having 1 - 20 carbon atoms or an aralkyl radical having 7 to 20 carbon atoms. Such radical is preferably attached by an ether linkage. Suitable substituents can e.g. a hydroxy group, a carboxy group with 1 to 4 carbon atoms, etc. According to certain embodiments the cellulose ether is selected from hydroxyethyl cellulose, methylcellulose, methylhydroxyethyl cellulose, ethylhydroxyethyl cellulose, and mixtures thereof. Furthermore, mixtures of different cellulose gums, different hydroxyalkylated carbohydrates, and mixtures of one or more cellulose gum with one or more hydroxyalkylated carbohydrate, as well as derivatives of one or either thereof, can be used. Also included as derivatives are salts of these cellulose ethers, preferably alkali metal salts thereof, e.g. sodium and/or potassium salts thereof.

According to certain embodiments the foam stabilizing agent has a viscosity between 300 mPas and 3000 mPas, preferably between 400 mPas and 2500 mPas, further preferably between 500 mPas and 2000 mPas, even further preferably between 700 mPas and 1700 mPas, particularly preferably between 900 mPas and 150 mPas. The viscosity can be suitably measured using a Brookfield viscometer, e.g. at 25°C, e.g. at 60 rpm, e.g. using paddle no. 3, e.g. at 1% (LVT).

The amount of the foam stabilizing agent in the foam is not particularly limited as long as a suitably stable foam can be formed. For example, the foam stabilizing agent can be contained in an amount of 3 - 60 wt.-%, preferably 4 - 50 wt.-%, more preferably 4 - 45 wt.-%, more preferably 4.2 - 40 wt.-%, further preferably 4.5 - 20 wt.-%, even further preferably 5 - 20 wt.-%, even further preferably 5.5 - 16 wt.-%, e.g. 8 - 40 wt.-%, e.g. 10 - 30 wt.-%, e.g. between and including 11 - 20 wt.-%.

Also the foam forming agent is not particularly restricted. According to certain embodiments, the foam forming agent of the present foam is selected from the group consisting of agar, gellan gum, lecithin, polyglycerol esters of fatty acids, glycerol esters of fatty acids, sorbitan esters of fatty acids, and/or mixtures thereof, without being limited thereto. A preferred foam forming agent is gellan gum. It has been shown that particularly proteoglycans, but also pectin and alginates, are less suitable as foam forming agents. The fatty acids therein are not particularly limited and can comprise e.g. 8 - 40 carbon atoms. Glycerol esters can be prepared by standard esterification methods. If glycerol esters of fatty acids are used, the foam forming agent can suitably be a compound such as glycerol monostearate and/or glycerol monooleate. Polyglycerol esters can be prepared by polymerizing glycerin under alkaline conditions suitably followed by reacting them with specific fatty acids. Suitable polyglycerol esters can be hexaglycerol monooleate, octaglycerol monostearate and/or octaglycerol monooleate. Sorbitan esters of fatty acids used in certain embodiments of the present invention can be sorbitan monostearate, sorbitan monooleate and/or sorbitan mono palmitate. Furthermore, any possible combinations of compounds belonging to the above mentioned classes can be used.

According to certain embodiments, the foam forming agent has a gel strength between 300 g/cm³ and 3000 g/cm³, preferably between 400 g/cm³ and 2500 g/cm³, further preferably between 500 g/cm³ and 2000 g/cm³, and/or has a viscosity between 300 mPas and 3000 mPas, preferably between 400 mPas and 2500 mPas, further preferably between 500 mPas and 2000 mPas. The viscosity can be measured as given above for the foam stabilizing agent, for example. The gel strength can be e.g. suitably measured using the Nikan method or the Kobe method, e.g. the Nikan method.

By choosing suitable amounts of foam forming agent and foam stabilizing agent together with the tobacco ingredient containing agent can create and stabilize the foam matrix, which can contribute to the hardness of the foam.

Like the foam stabilizing agent, the amount of the foam forming agent is not particularly limited as long as a foam is formed. For example, the foam forming agent can be contained in an amount of 0.5 - 12 wt.-%, preferably 1 - 11 wt.-%, more preferably 1.5 - 10 wt.-%, further preferably 1.8 - 9.5 wt.-%, further preferably 2 - 9 wt.-%, even further preferably 2 - 7 wt.-%, particularly preferably 2.25 - 6.75 wt.-%, e.g. 3 - 5.5 wt.-%.

Furthermore, also the aerosol forming agent is not particularly limited, and the foam can comprise also more than one aerosol forming agent, e.g. two, three or four, e.g. in the form of a mixture.

According to certain embodiments, the aerosol forming agent of the present foam is selected from the group consisting of glycerol, glycol derivatives, sebacate esters, and/or mixtures thereof, without being limited thereto. An exemplary glycol derivative that can be used in certain embodiments is propylene glycol, and an exemplary suitable sebacate ester can be di-2-ethylhexyl sebacate. Furthermore, any possible combinations of compounds belonging to the above mentioned classes can be used. For example, a combination of glycerol and propylene glycol can be used as aerosol forming agent. Preferred examples of the present aerosol forming agent are glycerol, propylene glycol, and mixtures thereof, with glycerol and a mixture of propylene glycol and glycerol further preferred and a mixture of propylene glycol and glycerol even further preferred. According to certain embodiments, at least glycerol is comprised as an aerosol forming agent. According to certain embodiments, the glycerol and propylene glycol can be used with equal weight percent, but also with different weight percent. In certain embodiments, 10 - 95 wt.-% of glycerol and 5 - 90 wt.-% of propylene glycol, preferably 10 - 80 wt.-% of glycerol and 20 - 90 wt.-% of propylene glycol, further preferably 10 - 70 wt.-% of glycerol and 70 -10 wt.-% of propylene glycol, e.g. 15 - 65 wt.-% of glycerol and 65 - 15 wt.-% of propylene glycol, preferably 20 - 40 wt.-% of glycerol and 10 - 40 wt.-% of propylene glycol, e.g. 20 - 40 wt.-% of glycerol and 20 - 40 wt.-% of propylene glycol can be used as aerosol forming agent, wherein the total mass of the aerosol forming agent is 10 to 80 wt.-%, preferably 40 - 70 wt.-% of the weight of the foam, so that the two components can be suitably set regarding their ratio. According to certain embodiments, glycerol is used as sole aerosol forming agent, though.

A suitable ratio of propylene glycol and glycerol is, according to certain embodiments, in a mixture comprising these two as aerosol forming agent or consisting of these two as aerosol forming agent, according to preferred embodiments between 8:1 and 1:8, preferably between 80:20 and 20:80, further preferably between 4:1 and 1:4, further preferably between 70:30 and 30:70, even further preferably between 1:2 and 2:1, e.g. between 60:40 and 40:60, e.g. between 55:45 and 45: 55, based on a weight ratio. According to certain embodiments, glycerol is used in an excess amount compared to propylene glycol if they are both used as a mixture for an aerosol forming agent or particularly are used as aerosol forming agent. According to certain embodiments, glycerol is used in an amount of at least 55 wt.-%, preferably at least 60 wt.-%, based on the total amount of glycerol and propylene glycol in the aerosol forming agent. Accordingly, according to certain embodiments, propylene glycol is used in an amount of at most 45 wt.-%, preferably 40 wt.-% or less, based on the total amount of glycerol and propylene glycol in the aerosol forming agent. According to certain embodiments, the ratio between glycerol and propylene glycol is between 20:80 and 90:10, preferably between 40:60 and 85:15, further preferably between 55:45 and 80:20, even further preferably between 60:40 and 80:20, e.g. around 60:40, e.g. 60:40, based on the total amount of glycerol and propylene glycol in the aerosol forming agent. The ratio of propylene glycol and glycerol can influence the basic viscosity of the foam. A higher amount of glycerol leads to a higher viscosity and to a better texture of the foam, e.g. a mousse and enables a better release of the tobacco ingredient containing agent, leading to a better "body" for inhalation due to a better mingling. It also leads to better portion stability due to the higher viscosity. Further, a higher amount of glycerol can lead to a decreased level of initially created vapor upon heating, which can have an influence on the harshness of the vapor felt upon inhalation. At the same heating temperature, also glycerol can release less vapor volume than propylene glycol if the heating is above the boiling point of both. A higher amount of propylene glycol leads to a sweet top note during inhalation especially if 10 wt.-% or more, preferably 20 wt.-% or more, e.g. 20 to 40 wt.-%, or more than 20 wt.-%, more than 30 wt.-%, or more than 40 wt.-% of the total humectant/aerosol forming agent comprises propylene glycol rather than glycerin.

According to certain embodiments, the aerosol forming agents are mixed before they are added in the second step of the present method if more than one aerosol forming agent is added.

According to certain embodiments the aerosol forming agent is comprised in an amount of 10 to 80 wt.-%, preferably 20 to 75 wt.-%, further preferably 40 - 70 wt.-%, further preferably 45 - 70 wt.-%, more preferably 45 - 65 wt.-%, particularly preferably 50 - 63 wt.-%, more preferably 55 to 65 wt.-%, e.g. about 60 wt.-% of the weight of the foam, which is much higher than in the prior art regarding reconstituted tobacco foams, as an aerosol is to be formed. This can for example enable a more convenient foam manufacturing process than in the prior art. If the amount of aerosol forming agent is too high, though, no foam is formed, but a creamy liquid fluid. If the amount of aerosol forming agent is too low, no foam is formed, but a paste particularly without a foam structure, particularly bubbles and/or pores. Propylene glycol as used in the present invention is to be understood as propane-1,2-diol. Glycerin or glycerol as used in the present invention is to be understood as 1,2,3-propanetriol.

In certain embodiments, the foams may comprise an electrically conducting material, and more particularly a ferromagnetic material, to generate heat by induction. The electrically conducting material is not particularly limited and may be any one of, or alloys of, iron, nickel, stainless steel, manganese, silicon, carbon and copper. The electrically conducting material might be in the form of a powder and/or larger particles. The amount thereof is not particularly restricted and can be suitably set.

The solvent is not particularly limited and can comprise e.g. purified water, an acid and/or ester, e.g. diacetin, and/or an alcohol such as ethanol, 1-propanol and/or 2-propanol, or mixtures thereof. According to certain embodiments, small amounts of water and/or acid and/or ester, e.g. diacetin, up to 15 wt.-%, preferably up to 10 wt.-%, e.g. up to 7 wt.-%, further preferably up to 6 wt.-%, even further preferably up to 3.5 wt.-%, particularly water in an amount of up to 15 wt.-%, preferably up to 10 wt.-%, e.g. up to 7 wt.-%, further preferably up to 6 wt.-%, even further preferably up to 3.5 wt.-%, can be added in the foam according to certain embodiments at a suitable time, e.g. together with the aerosol forming agent and/or the foam forming agent and/or the foam stabilizing agent and/or the tobacco ingredient containing agent, preferably together with the aerosol forming agent, but also at another time, e.g. before or after the aerosol forming agent. A solvent is preferably added with the aerosol forming agent, if it is added. Particularly the addition of water achieves a good foam formation due to interaction with the foam forming agent, particularly gellan gum.

According to certain embodiments, the pH of the first and/or second and/or third mixture in the present methods can be adjusted to a pH value between 5 and 9, e.g. between 5 and 8.5, preferably between 5.7 and 8.4, further preferably between 6 and 8.3 at any suitable time of the methods using a suitable pH adjusting agent. The pH adjusting agent is not particularly restricted and can be e.g. chosen from one or more of sodium carbonate, potassium carbonate, sodium hydrogen carbonate, potassium hydrogen carbonate, etc., and mixtures thereof. The amount thereof is not particularly restricted and can be e.g. between 0 and 2 wt.-%, preferably between 0.2 and 1.5 wt.-%, further preferably between and including 0.5 and 1 wt.-%, based on the total amount of the foam. The addition of a pH adjusting agent can increase the amount of the tobacco ingredient containing agent, e.g. nicotine, released, or perceived as having been released by a user, which can improve sensory satisfaction. However, if the pH is adjusted too high, this might negatively affect the taste.

In the present method the foam stabilizing agent is added after the foam stabilizing agent, the tobacco ingredient containing agent, the aerosol forming agent and optional solvent, and preferably added last, i.e. after the aerosol forming agent, the foam forming agent, the tobacco ingredient containing agent, the optional solvent, and further optional ingredients. Optional solvent and further optional ingredients can be added in a suitable step.

A final addition of the foam stabilizing agent leads to a stable formation of the foam matrix. This enables a suitable release of aerosol forming agent and flavor, thus enabling a better handling and particularly keeping volatiles in the foam matrix. During heating, at least the foam forming agent and foam stabilizing agent remain as a - disposable - shell after foam formation and evaporation of aerosol forming agent and at least aromas and/or flavors of the tobacco ingredient containing agent.

In the present method the first step of combining and mixing the tobacco ingredient containing agent and a foam forming agent to obtain a first mixture is not particularly restricted. The mixing of the tobacco ingredient containing agent and a foam forming agent can be carried out inside an extruder or outside an extruder, e.g. in a mixer to prepare an essentially homogeneous mixture of the tobacco ingredient containing agent and the foam forming agent. According to certain embodiments the tobacco ingredient containing agent and the foam forming agent are mixed together already outside the extruder. Of course further mixing of the tobacco ingredient containing agent and the foam forming agent can occur in the extruder. According to certain embodiments the tobacco ingredient containing agent and the foam forming agent can be introduced into the extruder from the same or different openings, e.g. at least two openings, and mixed inside the extruder, e.g. in a first barrel.

Also the second step of adding an aerosol forming agent and optionally a solvent and/or at least one non-tobacco flavoring agent to the first mixture to obtain a second mixture and the third step of adding a foam stabilizing agent to the second mixture to obtain a third mixture are not particularly restricted as far as they are carried out inside an extruder. The addition of the aerosol forming agent and/or the foam stabilizing agent is not particularly restricted and can occur from one or more openings at different locations in the extruder, preferably in different barrels, e.g. a second and a third barrel downstream of the transport direction of the mixture in the extruder. The addition can be e.g. done by metering in sufficient amounts of the aerosol forming agent and/or the foam stabilizing agent.

In the present method the extruder is not particularly restricted and any type of extruder can be applied, e.g. a single screw extruder, a twin screw extruder wherein the screws can run in a parallel or opposing fashion (counterwise each other). According to certain embodiments the extruder is a twin screw extruder which achieves a good mixing as well as stable foam formation. According to certain embodiments, the extruder has at least three barrels which are not particularly restricted, e.g. at least four, five, six, seven, eight, nine, ten, eleven, twelve, thirteen, fourteen, fifteen, sixteen, seventeen, eighteen, nineteen, twenty or more barrels, preferably at least six barrels, more preferably at least ten barrels.

According to certain embodiments, the tobacco ingredient containing agent and the foam forming agent are mixed inside the extruder, preferably in a first barrel of the extruder. This of course does not exclude a partial or total mixing of the tobacco ingredient containing agent and the foam forming agent beforehand.

According to certain embodiments, at least the aerosol forming agent is added in a second barrel of the extruder downstream of the first barrel, preferably wherein the second barrel is adjacent to the first barrel. This way the aerosol forming agent can be added at an early point during foam formation, enabling a good distribution of the aerosol forming agent in the foam. According to certain embodiments, an optional solvent is added together with or independently of the aerosol forming agent, particularly in the second barrel. The early addition of a solvent to the first mixture enables a good mixing with the foam forming agent and thus allows use of the full potential of the foam forming agent before the foam stabilizing agent is added.

According to certain embodiments, the foam stabilizing agent is added in a third barrel of the extruder downstream of the second barrel, preferably wherein the second barrel is not adjacent to the third barrel. According to certain embodiments, the addition of the foam stabilizing agent is carried out in a sixth, seventh, eighth or ninth barrel of an extruder having at least ten barrels, e.g. ten to fifteen barrels, e.g. ten to twelve barrels, e.g. ten barrels. The late addition of the foam stabilizing agent allows a thorough mixing of the second mixture to become essentially homogeneous. Preferably the foam stabilizing agent is not added in the last barrel of the extruder in the direction of transport of the mixture, so that sufficient mixing and foam formation can occur. With different amounts of barrels suitable addition points of the foam stabilizing agent can be suitably determined.

According to certain embodiments, a temperature in the first step is in a range between and including 30 and 80°C, preferably between and including 45 and 70°C, further preferably between and including 55 and 65°C, e.g. about 60°C. This achieves a good mixing of the tobacco ingredient containing agent and the foam forming agent and allows pre-warming to a suitable temperature for addition of the aerosol forming agent.

According to certain embodiments, a temperature in the second step is in a range between and including 50 and 115°C, preferably between and including 60 and 95°C, particularly preferably between and including 80 to 85°C. At this temperature a good distribution of the aerosol forming agent is achieved in the first mixture. After this addition of the aerosol forming agent, preferably mixing of the second mixture is carried out in at least one barrel, preferably in at least two barrels, further preferably in at least three barrels, even further preferably in at least four barrels, particularly preferably at least five barrels, particularly after the second barrel, e.g. the third to seventh barrel, before the foam stabilizing agent is added in the third step, to allow for homogeneous mixing. In such a mixing the temperature preferably is in a range between and including 30 and 125°C, preferably between and including 45 and 120°C, further preferably between and including 75 and 105°C, particularly preferably between and including 85 and 100°C. If the temperature is too high, the aerosol forming agent may evaporate too much, making mixing difficult. If the temperature is too low, mixing may be difficult due to the consistency of the second mixture..

According to certain embodiments, a temperature in the third step is in a range between and including 30 and 125°C, preferably between and including 45 and 120°C, further preferably between and including 75 and 105°C, particularly preferably between and including 85 and 100°C. This allows a homogeneous admixing of the foam stabilizing agent and the formation of good and stable foam.

According to certain embodiments, mixing of the third mixture is carried out in at least one barrel, preferably in at least two barrels after the addition of the foam stabilizing agent, e.g. a ninth and tenth barrel if the foam stabilizing agent is added in the eighth barrel. This allows essentially homogeneous and stable foam formation.

According to certain embodiments, the extruder is operated at a speed of between and including 200 and 900 rpm, preferably between and including 250 to 800 rpm, further preferably between and including 300 to 700 rpm, e.g. at 300 rpm. At such speed a good mixing is achieved. If the speed is too high, it is difficult to achieve a stable foam and gases may leak. If the speed is too low thorough mixing may be difficult to achieve, leading to inhomogeneity.

According to certain embodiments, the forming of the shaped foam can be done continuously in the extruder.

After mixing the third mixture is extruded from the extruder, e.g. through a die, which is not particularly restricted and can be e.g. round, oval, square, rectangular, star-shaped, etc.. The die can have any shape. According to certain embodiments, the third mixture is extruded from a circular or round die preferably at a temperature of at least 60°C, further preferably at least 70°C, and/or at a temperature of at most 130°C. Also extrusion of different shapes, e.g. in form of a hollow cylinder (having a doughnut shaped when viewed from the front) is possible.

According to certain embodiments, the method further comprises a step of cooling the shaped foam after extruding. The extruded mixture can be cooled by any suitable means which is not particularly restricted, e.g. using cold air, e.g. in the form of an air knife (flatish planar like jet of air), a cooler, a cooling belt and/or a mesh. According to certain embodiments, the shaped foam is cooled to a temperature of below 60°C, preferably equal to or less than 50°C, and most preferably to between 30°C and 50°C. Cooling allows easy post-processing of the shaped foam, e.g. portioning of a continuous strand of shaped foam, e.g. by cutting.

According to certain embodiments, the shaped foam is cut into pieces of shaped foam after extrusion.

According to certain embodiments, the foam is portioned and/or shaped after the forming of the foam. The portioning thereof is not particularly restricted and can be carried out e.g. by cutting into an appropriate shape and/or size.

According to certain embodiments, the shaped foam can be aged, although this may be not required due to the extrusion process. If an aging step is carried out, it can be e.g. carried out also after the portioning.

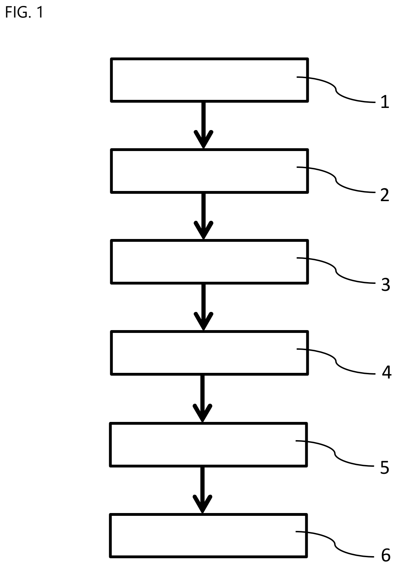

An exemplary method of the present invention is schematically shown in FIG. 1

In a first step 1 a tobacco ingredient containing agent, e.g. tobacco, and a foam forming agent, e.g. gellan gum, are combined and added into an extruder and a first mixture is transported in the extruder. In a second step 2 then an aerosol forming agent, e.g. a mixture of glycerol and propylene glycol, and optionally solvent, e.g. water, is added to the first mixture and a second mixture formed inside the extruder. In a third step 3 a foam stabilizing agent, e.g. carboxymethyl cellulose, e.g. as a powder, is added to the second mixture, and a third mixture is formed and transported inside the extruder. In a fourth step 4 the third mixture is extruded, e.g. through a circular die to form a cylindrical strand of tobacco-containing foam. In an optional step 5 the cylindrical strand is cooled, and in an optional step 6 the cooled strand is cut to form potions of cylindrical tobacco-containing foam.

A second aspect of the present invention is directed to a shaped foam containing a tobacco ingredient containing agent, produced by the method of the present invention.

With the present method the foam of the present invention can be produced. Therefore, the aerosol forming agent, the foam forming agent, the foam stabilizing agent, the tobacco ingredient containing agent, the optional solvent can be chosen as indicated also with regard to the method of the invention, as well as the amounts of each of these. Also, at least one non-tobacco flavoring agent and/or an electrically conducting material and/or other optional ingredients can be suitably added, as indicated also with regard to the present method.

The present foam can be - according to certain embodiments - configured to be heated but not combusted, i.e. is used in an application where it is not smoked.

In the following, the description relates to the present foam, unless clear from context that it is otherwise. The present foam preferably is not smokable, i.e. is applied in a way that it is not heated to such temperature where it is combusted, but only at least parts thereof are evaporated, particularly at least essentially the aerosol forming agent and further preferably at least a part of the tobacco ingredient containing agent, further preferably also essentially the tobacco ingredient containing agent. In the present foam, at least some of the tobacco ingredient containing agent preferably is adhered to the foam structure and/or absorbed by the foam structure formed essentially by the foam forming agent and the foam stabilizing agent, so that it can be easily released together with the aerosol forming agent upon heating. Also, it is possible that some parts of the tobacco ingredient containing agent are bound to the foam structure and the tobacco ingredient containing agent is "extracted" during heating thereof, so that a flavor from the tobacco ingredient containing agent is released thereof together with the aerosol forming agent. According to certain embodiments, the tobacco ingredient containing agent is configured in such a way that it is released upon heating together with the aerosol forming agent by only being essentially adsorbed to and/or absorbed in the foam structure.

Also, the foam is - according to certain embodiments - not bound and/or connected to a carrier, i.e. can be used as is, i.e. as free-standing foam. Particularly, the foam is not bound to a substrate according to certain embodiments, but rather is used as is. Thus, according to certain embodiments, the present foam is stable enough to be used as is, i.e. is self-supporting, and has a sufficient stiffness so that it is not bent when picked up and does not require a further stabilizing substrate.

According to certain embodiments, the present foam is biodegradable. The present foam can be e.g. in the form of a mousse. The foam structure in the foam is not particularly limited and can, for example, comprise trapped air bubbles and/or bubbles of other gases such as nitrogen or oxygen, e.g. air bubbles. It can be provided as an open structure with a large surface area, which enables heat and aerosol to circulate through the foam, particularly during heating, thus providing uniform heating, a good quality aerosol, and extremely efficient extraction of the tobacco ingredient containing agent. According to certain embodiments the foam is an open pored foam. It can be a liquid foam, a dry foam, a solid foam, or a pellet, preferably a dry foam, a solid foam or a pellet. The foam forming agent generally can trap the bubbles when the foam is formed, and the foam stabilizing agent can reduce and even prevent breakdown of the foam. The bubbles of the foam may have an average diameter in the range of 20 - 120 µm, e.g. 50 - 100 µm, e.g. 60 - 80 µm, and about 98% of the bubbles may have a diameter of 160 µm or less, e.g. 140 µm or less, e.g. 120 µm or less. The foam may be formed into any suitable shape for insertion into an e-cigarette. According to certain embodiments, the present foam comprises at least one blind or hole through the foam for circulation and aerosol transmission, e.g. one, two, three, four, five, six, seven, eight, nine, ten or more holes through the foam. An example shape is an annular pipe shape hole going through the foam portion of any shape, e.g. of about 1cm diameter, e.g. a 3 mm through hole, or a square, a star, but can also be any other shape or dimension. According to certain embodiments, the foam is having a structure having a big surface area, e.g. having at least one surface with at least one distance between any two sides of the surface or with a diameter that is sufficiently larger than the thickness of the foam. The foam can thus be in the shape of a disc, e.g. a cylindrical disc, a thin plate, etc. According to certain embodiments the at least one hole is going through the at least one surface with at least one distance between any two sides of the surface or with a diameter that is sufficiently larger than the thickness of the foam.

The present foam can for example be formed into a foam pipe, disc, etc., with optionally one or more tunnels and/or holes for the airflow, and a foam stick, etc. can for example be cut into pod-sized pieces to be placed in a pod

The foam can be arranged as a pod, disc, or stick, and may be wrapped in a porous paper, for example with a filter at the tip proximal the user. The porous paper is not particularly limited and may be made of wood pulp and/or hemp fibers or combinations thereof. The filtering material of the filter is not particularly limited and may be any filamentary material conventionally employed for tobacco smoke filter manufacture. The filtering material may be a natural or synthetic filamentary tow, e.g. of cotton or plastics such as polyethylene or polypropylene, or cellulose acetate filamentary tow.

The present foam may be sold in packaging, e.g. a hermitically sealed wrapper, which may for example be removed by the user or perforated by the e-cigarette when operatively housed. Another example can be a blister pack containing one or several foam units, either together or separate, e.g. separated, i.e. in separated packaging units that can be opened separately. According to certain embodiments, the packaging at least prevents water from contacting the present foams.

A peripheral supporting material e.g. metal or other inert material for heat transmission may surround the present foam. In an example of an annular ring foam, the supporting material can be a metal ring arranged e.g. around the side of the annulus. The supporting material may have apertures for circulation.

The present foam can be used in an aerosol generating apparatus. An aerosol generation apparatus within the present invention is not particularly limited, and is used to generate an aerosol. It can comprise, for example, an electronic cigarette (e-cigarette) or similar devices, like electronic pipes. An electronic cigarette (e-cigarette) or similar devices like electronic pipes, as referred to in the present invention, are not particularly limited, and may be used to provide a user with an aerosol to inhale. It can, according to certain embodiments, comprise a mouthpiece, a heater, a receiving portion, e.g. a pod, and a casing. A pod is not particularly limited and can be a storage device into which the present foam can be, e.g. removably, inserted. It can for example be in cylindrical, conical, stick and/or cuboid form, but is not limited to such shapes. A heater can be e.g. an induction heating system that is not particularly limited and may be any system which uses electromagnetic induction created by a coil positioned around an electrically conducting material, and more particularly a ferromagnetic material, to generate heat.

Furthermore disclosed in a third aspect is a device for producing shaped foam containing a tobacco ingredient containing agent, comprising
an extruder comprising:
at least three barrels, comprising
a first barrel that is configured to mix the tobacco ingredient containing agent and a foam forming agent to obtain a first mixture, and which comprises at least one opening that is configured to introduce a mixture containing the tobacco ingredient containing agent and the foam forming agent, or which comprises at least two openings that are configured to introduce the tobacco ingredient containing agent and a foam forming agent separately;
a second barrel that is configured to mix the first mixture with an aerosol forming agent and optionally a solvent and/or at least one non-tobacco flavoring agent to obtain a second mixture, and which comprises at least one opening that is configured to introduce the aerosol forming agent and optionally the solvent and/or the at least one non-tobacco flavoring agent; and
a third barrel that is configured to mix the second mixture with a foam stabilizing agent to obtain a third mixture, and which comprises at least one opening that is configured to introduce the foam stabilizing agent;
wherein the second barrel is located downstream of the first barrel and the third barrel is located downstream of the second barrel in the direction in which a mixture is transported inside the extruder;
wherein the extruder further comprises a die plate that is configured to shape the third mixture into the shaped foam containing a tobacco ingredient containing agent.

The device for producing shaped foam particularly can be used for carrying out the method of the present invention, and for producing the foam of the present invention. Therefore embodiments and description laid out with regard to the present method and foam also apply to the present device, where applicable, and vice versa.

In the present device the extruder is not particularly restricted and can be a single screw or twin screw extruder, particularly a twin screw extruder, as laid out above. It contains at least three barrels, e.g. at least four, five, six, seven, eight, nine, ten, eleven, twelve, thirteen, fourteen, fifteen, sixteen, seventeen, eighteen, nineteen, twenty or more barrels, preferably at least six barrels, more preferably at least ten barrels.

It contains at least a first barrel with at least one opening for introducing a mixture containing the tobacco ingredient containing agent and the foam forming agent, and/or at least two openings for introducing the tobacco ingredient containing agent and the foam forming agent separately. Of course the tobacco ingredient containing agent and/or the foam forming agent can be introduced through more than one opening each, as well as the mixture of both. According to certain embodiments, they or the mixture can be metered into the first barrel by a suitable meter and/or be introduced by a suitable unit, e.g. a hopper.

The extruder further comprises a second barrel for introducing the aerosol forming agent and optional solvent and for producing a second mixture, having at least one opening for introducing the aerosol forming agent and optional solvent, e.g. also at least two openings for introducing aerosol forming agent and solvent, e.g. water. According to certain embodiments, a meter and/or a unit for introducing the aerosol forming agent and optional solvent is attached to the second barrel at the at least one opening of the second barrel.

The extruder further comprises a third barrel for introducing the foam stabilizing agent and forming a third mixture, having at least one opening for introducing the foam stabilizing agent. According to certain embodiments, a meter and/or a unit for introducing the foam stabilizing agent solvent is attached to the second barrel at the at least one opening of the second barrel.

The extruder preferably has also further barrels for mixing the respective mixtures, e.g. one, two, three, four, five, six or more barrels following the second barrel in the direction of transport of the second mixture, and/or one, two, three or more barrels following the third barrel in the direction of transport of the third mixture. Also the extruder of course has at least one screw, e.g. two screws in case of a twin screw extruder, which pass through the barrels of the extruder.

According to certain embodiments, the barrels of the extruder can be heated separately. The shape of the barrels and the separation between them is not particularly restricted.

The extruder comprises a die plate for shaping the third mixture into a desired shape, e.g. a cylindrical shape or a cylinder with an annular hole in the middle, etc. The die plate is not particularly restricted.

According to certain embodiments, the device further comprises a cutter downstream of the extruder (in the direction of transport of the extruded shaped foam) which is configured to cut the shaped foam into pieces after extrusion. The cutter is not particularly restricted.

According to certain embodiments, the device further comprises a cooling equipment downstream of the extruder and upstream of the cutter (in the direction of transport of the extruded shaped foam), preferably wherein the cooling equipment is an air knife, a cooler, a cooling belt and/or a mesh.

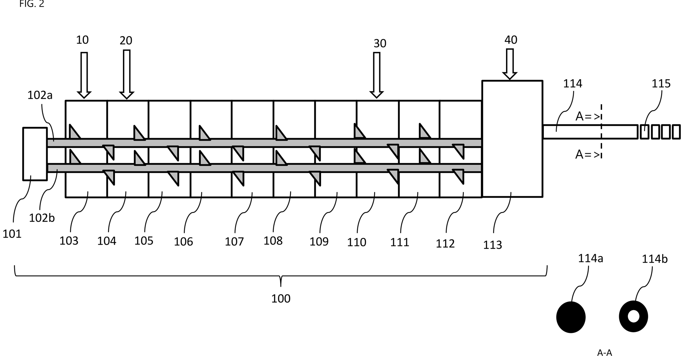

An exemplary device of the present invention is schematically shown in FIG. 2

The device comprises the extruder 100, here a twin screw extruder, which comprises a driver 101 and two screws 102a, 102b which go through all barrels 103-112 until the die plate 113, which is here a fixing plate. The screw design is modular and can be different in each barrel section, e.g. with regard to mixing, compaction and/or transport.

In a first barrel 103 a first mixture 10 of tobacco ingredient containing agent and foam forming agent can be added. In a second barrel 104 an aerosol forming agent 20 and optionally water as solvent can be added. Following further barrels 105 to 109 for mixing, a foam stabilizing agent 30 can be added in a "third" barrel 110 (being here the eighth barrel in the direction of transport). Further mixing can then be carried out in barrels 111 and 112, before the mixture is then shaped inside the die plate 113. The die plate can contain different dies 40 that define the shape of the final shaped tobacco ingredient containing foam, e.g. a cylindrical shaped foam 114 with a round shape 114a or an annular shape 114b at the cross-section A-A indicated in the figure. The cylindrical shaped foam 114 can then e.g. cut by a cutter (not shown) into portions 115.

The above embodiments can be combined arbitrarily, if appropriate. Further possible embodiments and implementations of the invention comprise also combinations of features not explicitly mentioned in the foregoing or in the following with regard to the examples of the invention. Particularly, a person skilled in the art will also add individual aspects as improvements or additions to the respective basic form of the invention.

### Examples

The present invention will now be described in detail with reference to examples thereof. However, these examples are illustrative and do not limit the scope of the invention.

### Example 1.

A cylindrically shaped strand of tobacco foam that is filled (with a round die with a diameter of 7 mm) and a cylindrically shaped strand of tobacco foam with a hole in the center (by extrusion through a ring hole die) are produced with a twin screw extruder as shown in FIG. 2, with tobacco and gellan gum as first mixture 10 being added to barrel 103, a mixture of glycerol and propylene glycol being added as aerosol forming agent 20 together with water to barrel 104, and carboxymethyl cellulose as foam stabilizing agent 30 being added to barrel 110.

Settings of the extruder tested in pre-experiments are as shown in Table 1.

**Table 1: Extruder settings**

| | | Settings |
|---|---|---|
| Screw speed (rpm) | | 300 - 700 |
| Temperature (°C) | Barrel 1 | 60 |
| | Barrel 2 | 60 - 95 |
| | Barrel 3-10 | 45 - 120 |

Following pre-testing, four samples of tobacco-containing foam were produced with the amounts and settings given in Table 2.

**Table 2: Extruder settings and amounts of components for preparing samples 1 to 4**

| Sample no. | Screw speed | Barrel temperature (°C) | | | Components (kg /h) | | | | |
|---|---|---|---|---|---|---|---|---|---|
| | | Barrel 1 | Barrel 2 | Barrel 3-10 | Gellan gum | Tobacco powder | PG / G | Water | CMC |
| 1 | 300 | 60 | 85 | 85 | 3.15 | 14.70 | 42.00 | 5.95 | 7.70 |
| 2 | 300 | 60 | 85 | 85 | 3.15 | 14.70 | 42.00 | 5.95 | 7.70 |
| 3 | 300 | 60 | 80 | 100 | 3.15 | 14.70 | 42.00 | 5.95 | 7.70 |
| 4 | 300 | 60 | 80 | 100 | 3.15 | 14.70 | 42.00 | 2.45 | 7.70 |

| | | | | | | | | | |
|---|---|---|---|---|---|---|---|---|---|
| PG / G: mixture of propylene glycol and glycerol (ratio of PG : G of 60 : 40 (wt./wt.); similar results with a ratio of PG : G of 40 : 60 (wt./wt.)) CMC: carboxymethyl cellulose | | | | | | | | | |

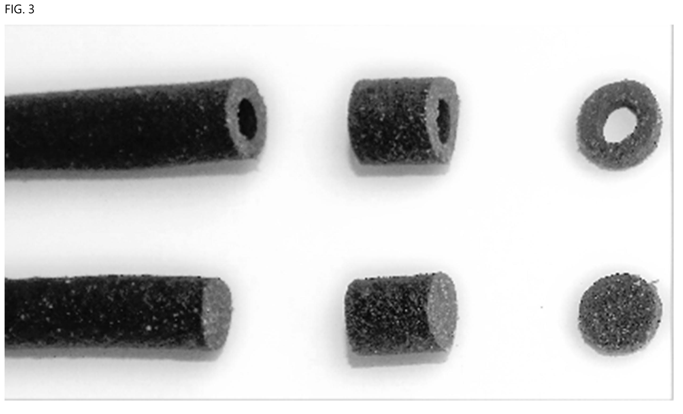

With sample 1 homogeneous strands with a smooth surface could be produced, both with cylindrical and annular shape. Similar, sample 2 achieved production of a solid foam. Sample 3 achieved a strand with lower viscosity, and sample 4 achieved strands that have an elastic feeling. For sample 4 pictures of the two produced strands are shown in FIG. 3.

### Comparative example 1

A foamed tobacco product was formed in a mixer with aeration with the amounts given for sample 4 with the sequence of addition as in the extruder. After formation of the foam a curing at 45°C for 8 h was required to obtain a stable foam that keeps its shape. Compared to the comparative example the foam produced in samples 1 and 4 had a fluffy structure. Also, the extruded foams achieved a higher elasticity

The samples of the examples as well as the comparative example were cut into a sized portion to be introduced into an electrical cigarette and heated for a comparison of taste. No particularly discernible difference in taste was observed.

The following aspects relate to further embodiments of the present invention:
1. A method of forming a shaped foam containing a tobacco ingredient containing agent, comprising:
   a first step of combining and mixing the tobacco ingredient containing agent and a foam forming agent to obtain a first mixture;
   a second step of adding an aerosol forming agent and optionally a solvent and/or at least one non-tobacco flavoring agent to the first mixture to obtain a second mixture;
   a third step of adding a foam stabilizing agent to the second mixture to obtain a third mixture; and
   extruding the third mixture to produce a shaped foam,
   wherein at least the second and the third step are carried out inside an extruder.
2. The method according to aspect 1, wherein the tobacco ingredient containing agent and the foam forming agent are mixed inside the extruder, preferably in a first barrel of the extruder.
3. The method according to aspect 2 wherein at least the aerosol forming agent is added in a second barrel of the extruder downstream of the first barrel, preferably wherein the second barrel is adjacent to the first barrel.
4. The method according to aspect 3, wherein the foam stabilizing agent is added in a third barrel of the extruder downstream of the second barrel, preferably wherein the second barrel is not adjacent to the third barrel.
5. The method according to any one of the preceding aspects, wherein a temperature in the first step is in a range between and including 30 and 80°C, and/or wherein a temperature in the second step is in a range between and including 50 and 115°C, and/or wherein a temperature in the third step is in a range between and including 30 and 125°C.
6. The method according to any one of the preceding aspects, wherein the extruder is operated at a speed of between and including 200 and 900 rpm.
7. The method according to any one of the preceding aspects, wherein mixing of the second mixture is carried out in at least one barrel before the foam stabilizing agent is added in the third step, and/or wherein mixing of the third mixture is carried out in at least one barrel after the addition of the foam stabilizing agent.
8. The method according to any one of the preceding aspects, wherein the third mixture is extruded from a circular or round die preferably at a temperature of at least 60°C.
9. The method according to any one of the preceding aspects, further comprising a step of cooling the shaped foam after extruding.
10. The method of aspect 9, wherein the shaped foam is cooled to a temperature of below 60°C, preferably equal to or less than 50°C, and most preferably to between 30°C and 50°C.
11. The method according to any one of the preceding aspects, wherein the shaped foam is cut into pieces of shaped foam after extrusion.
12. A shaped foam containing a tobacco ingredient containing agent, produced by the method according to any one of the preceding aspects.
13. A device for producing shaped foam containing a tobacco ingredient containing agent, comprising
   an extruder comprising:
   at least three barrels, comprising
   a first barrel that is configured to mix the tobacco ingredient containing agent and a foam forming agent to obtain a first mixture, and which comprises at least one opening that is configured to introduce a mixture containing the tobacco ingredient containing agent and the foam forming agent, or which comprises at least two openings that are configured to introduce the tobacco ingredient containing agent and a foam forming agent separately;
   a second barrel that is configured to mix the first mixture with an aerosol forming agent and
   optionally a solvent and/or at least one non-tobacco flavoring agent to obtain a second mixture, and which comprises at least one opening that is configured to introduce the aerosol forming agent and optionally the solvent and/or the at least one non-tobacco flavoring agent; and
   a third barrel that is configured to mix the second mixture with a foam stabilizing agent to obtain a third mixture, and which comprises at least one opening that is configured to introduce the foam stabilizing agent;
   wherein the second barrel is located downstream of the first barrel and the third barrel is located downstream of the second barrel in the direction in which a mixture is transported inside the extruder;
   wherein the extruder further comprises a die plate that is configured to shape the third mixture into the shaped foam containing a tobacco ingredient containing agent.
14. The device according to aspect 13, further comprising a cutter downstream of the extruder which is configured to cut the shaped foam into pieces after extrusion.
15. The device according to aspect 13 or 14, further comprising a cooling equipment downstream of the extruder and upstream of the cutter, preferably wherein the cooling equipment is an air knife, a cooler, a cooling belt and/or a mesh.

## Claims

1. An extruded shaped foam comprising: a tobacco ingredient containing agent, an aerosol forming agent, a foam stabilizing agent, and a foam forming agent.

2. An extruded shaped foam according to claim 1, further comprising at least one non-tobacco flavoring agent, in particular menthol.

3. An extruded shaped foam according to claim 1 or claim 2, further comprising at least a solvent, in particular water.

4. An extruded shaped foam according to any preceding claim, the tobacco ingredient containing agent is at least one selected from the group consisting of tobacco, tobacco flavor such as various tobacco extracts, and nicotine or a derivative thereof.

5. An extruded shaped foam according to any preceding claim 1 to 3, wherein the tobacco ingredient containing agent is any compound, mixture, particle matter, and/or solution that contains and/or carries a constituent of tobacco, which is artificially included or naturally contained in tobacco, for example tobacco, tobacco particles, tobacco flavor and/or nicotine.

6. An extruded shaped foam according to any preceding claim, the tobacco ingredient containing agent comprises tobacco particles having a particle size of less than 200 um, preferably less than 150 um, further preferably less than 100 um, even further preferably less than 50 um, even preferably less than 30 um, e.g. 2 - 150 pm, e.g. 5 - 100 um, e.g. 5 - 50 um, e.g. 5 - 30 um, e.g. 5 - 15 um, e.g. 20 - 50 um, e.g. 60-90 um.

7. An extruded shaped foam according to any preceding claim, further comprising an electrically conducting material, in particular a ferromagnetic material.

8. An extruded shaped foam according to any preceding claim, the textured shape foam is in form of a hollow cylinder, in particular having a doughnut shape when viewed from a front.

9. An extruded shaped foam according to any preceding claim, the textured shape foam comprises at least one blind or hole through the foam, in particular wherein the at least one hole is going through the at least one surface with at least one distance between any two sides of the surface or with a diameter that is sufficiently larger than the thickness of the foam.

10. An extruded shaped foam according to claim 9, the number of the hole is one, two, three, four, five, six, seven, eight, nine, ten or more.

11. An extruded shaped foam according to any preceding claim, wherein the aerosol forming agent is comprised in an amount of 10 to 80 wt.-% of the weight of the extruded shaped foam.

12. A stick comprising the extruded shaped foam according to any one of claims 1 to 11, a filter, and a porous paper to wrap the extruded shaped foam and the filter.

13. An electronic smoking device, in particular an electronic cigarette or electronic pipes comprising the extruded shaped foam according to any preceding claim 1 to 11 or the stick according to claim 12.

14. Use of an extruded shaped foam according to any preceding claim 1 to 11 in an electronic smoking device, in particular in an electronic cigarette or electronic pipes to generate an aerosol.

15. A shaped foam containing a tobacco ingredient containing agent, produced by a method of forming a shaped foam containing a tobacco ingredient containing agent, comprising:
a first step of combining and mixing the tobacco ingredient containing agent and a foam forming agent to obtain a first mixture;
a second step of adding an aerosol forming agent and optionally a solvent and/or at least one non-tobacco flavoring agent to the first mixture to obtain a second mixture;
a third step of adding a foam stabilizing agent to the second mixture to obtain a third mixture; and
extruding the third mixture to produce a shaped foam,
wherein at least the second and the third step are carried out inside an extruder.
